# EUROPEAN PATENT APPLICATION

(11) **EP 1 890 256 A1**
(43) Date of publication of application: **20.02.2008**
(21) Application number: 07011560.5
(22) Date of filing: 14.06.2007
(51) Int. Cl.: G06Q 10/00

(54) **Automated system to identify and track luggages, goods and vehicles regarding to ports, airports and logistics**

(30) Priority: 25.07.2006 IT VE20060048
(71) Applicant: Nethun S.r.l., 30135 Venezia (VE) (IT)
(72) Inventor: Trevisan, Carlo, 30135 Venezia (VE) (IT); Brugnera, Marcello, Ing., 30135 Venezia (VE) (IT)
(74) Representative: Lazzerini, Bruna

(57) **Abstract**

The system is characterized by the use of Radio technology (RFId - Radio

Frequency Identification) and aims at the automation of processes for the tracking of baggage or things in movement, more particularly in the aeronautic, marine and logistics environments.

The procedures which are currently adopted do not allow the automated seeking of lost baggage, nor objective baggage-passenger reconciliation other than with burdensome manual intervention, as the technology used is the barcode, the reading of which requires visibility of the label.

By overcoming the problems caused by the lack of a writing-reading standard, this system allows the exchange of informations between different operational sites.

An essential characteristic of the system is the careful use which is made of the radio component, with a resulting drastic reduction in the running costs and the overcoming of problems related to writing (reading) standards.

More particularly, in the airport environment the system lends itself to:
- automating the reconciliation operations and procedures, baggage (searching) (*Lost & Found*) and hold searching;
- certifying the radiogenic control;
- replacing bar-codes in automated sorting systems.

## Description

### Meanings are as follows for the purposes of this description:

DCS: *Departure Control System -* system for the management of departing passengers
RX: Radiogenic control unit
WBDB: *World Baggage Data Base -* generalized database
LBDB: *Local Baggage Data Base -* local database
ATB: Boarding card printer
BTP: Label printer
BHS: *Baggage Handling System -* Automatic baggage sorting system
SERVER: reference computer in a system with several computers
LAN: *Local Area Network -* Local data network
DB L&F: *Data Base Lost & Found -* Worldwide lost baggages information system
RFId: *Radio Frequency Identification -* radio frequency labels
Lost & Found: lost baggage searching

### Background

In the air transport sector there remain several management criticalities which sometimes have importance not only for security, but also for financial efficiency and effectiveness i.e. on the quality of the service supplied.

In this case we have examined all problems connected with passengers' baggage, and have fine-tuned a system which allows both the tracking of baggages at any time in its route and its reconciliation with passengers. For this purpose, the meaning of baggage/passenger reconciliation is: the control of baggage taken delivery of on passenger check-in with the numbers of baggage taken aboard on a particular flight.

This is done with an automatic system which allows fast tracking and modest costs compatible with those presently sustained, full integrability with existing systems and lack of impact on the organization of work.

### Article I. CURRENT SYSTEMS

### Labels

All baggage management systems, whether automated or not, make reference to the label which is coupled with the item of baggage when it is presented at check-in.

In the airport environment, the label with which the baggage is marked bears in particular the acronym of the airline company and that of the destination air station (or several air stations in the event that there are several stages) and a progressive **number** in both the **letters** and **bar-code** formats which identifies the baggage in a unambiguous manner (by flight).

For manual management, the references for operators are the airline and the destination air station, whereas for automated management the reference is the bar-code.

### Small airports

In small airports, all baggage operations are carried out manually without the aid of computerization, and are limited solely to the visual recognition of the label. Baggage-passenger reconciliation, certification that the radiogenic control has taken place and the recovery of undelivered baggage are carried out manually.

### Medium-large airports without BHS

In these airports:
- baggage-passenger reconciliation operations are performed by means of an operator equipped with an instrument which reads the bar-code printed on the baggage label;
- there is no certification that the radiogenic control of the baggage has taken place;
- recovery of lost baggage is carried out by means of an information system with worldwide validity, which requires the manual entering of all the baggage data.

### Airports with the BHS system

A BHS system is a automated baggage management system which, unlike systems with conveyor belts only (even if complex ones), automatically manages the baggage throughout its internal route through in the airport: from the check-in to the boarding gate.

Baggage collected at the check-in and entered into the BHS system is pinpointed throughout the route and at pre-set points, by means of the automated reading of the bar-code, and is therefore directed to the boarding gate assigned to the passenger's flight.

Baggage-passenger reconciliation, which is generally provided for in the stage of transfer of the baggage from the belt to the truck, is often not carried out as reading of the bar-code is critical since it cannot be fully automated (the baggage must be placed in such a way as to make the bar-code visible to the reader). Reconciliation is as for airports without BHS, whereas certification that the radiogenic control of the baggage has taken place is not done.

For lost baggage, the above description for medium-sized airports applies.

### NEW PROPOSED SYSTEM

The new system proposed aims to:
- improve effectiveness and ensure that baggage-passenger reconciliation really is performed in a fully automated manner;
- to certify that the radiogenic control of the baggage has taken place;
- to allow for the searching for lost baggage to take place with the same method currently used, however with the difference that the operator will find all the necessary data already automatically entered in his terminal;
- to extend the reconciliation to the aircraft, i.e. to make a mapping of the load possible, meaning the tracking of baggage in the hold - this tracking being completed with the baggage restitution phase in the arrival or transit airport, without changing the existing organization of work and without increasing labour.

The system uses **RFId** technology labels and operates in a manner which is complementary to the other existing airport computing systems i.e. DCS.

In the initial stage of the process (departure), the system provides for the reading of the code of a RFId type label, and the coupling of this code with the personal details of the "*owner*" party or the labelled goods, gathering the data automatically from the system used in the check-in stage.

In addition to radio frequency labels, the system uses a generalized WBDB database (search engine) and other local validity LBDB databases, all with a combination of integrated hardware and software elements.

In this way the problem of the writing standard is overcome and consequently the reading standard also; constraints which currently prevent the generalized adoption of this type of label.

Unlike what has already been tried out in some airports with the sole use of radio-frequency labels containing all information on the baggage, the mixed system proposed here, with the use of LBDB units, drastically reduces costs for RFId labels which are only used for the related identification code, thus being found to be compatible with present costs in addition to having the above-described benefits.

The personal data thus generated in the local database may, however, be further added to in that same unit, with other data considered to be useful (e.g. photo, weight, address, ticket, control point etc.) at any other time or place in the same process; these data or parts of them, processed and consolidated locally on the LBDB (e.g. departure module), are made visible to the WBDB which makes them accessible to other users also (e.g. arrival airport, Lost & Found).

In fact, in addition to reconciliation (e.g. baggage / passenger), the system also allows the tracking of the entire route. Therefore (e.g. in the airport environment) it lends itself well to integrating the Lost & Found system, avoiding the need to manually enter the data concerning the baggage at the time of reporting of the loss.

In this way, reading the bar-code printed on the passenger's flight document (ticket)
it will be possible to go back and obtain all the data handled previously including the last reading carried out during the route.

### WORKING PROCESS

The present label is integrated with a RFId type chip, keeping all the size characteristics and other information printed with the printing process (including the bar-code) unchanged.

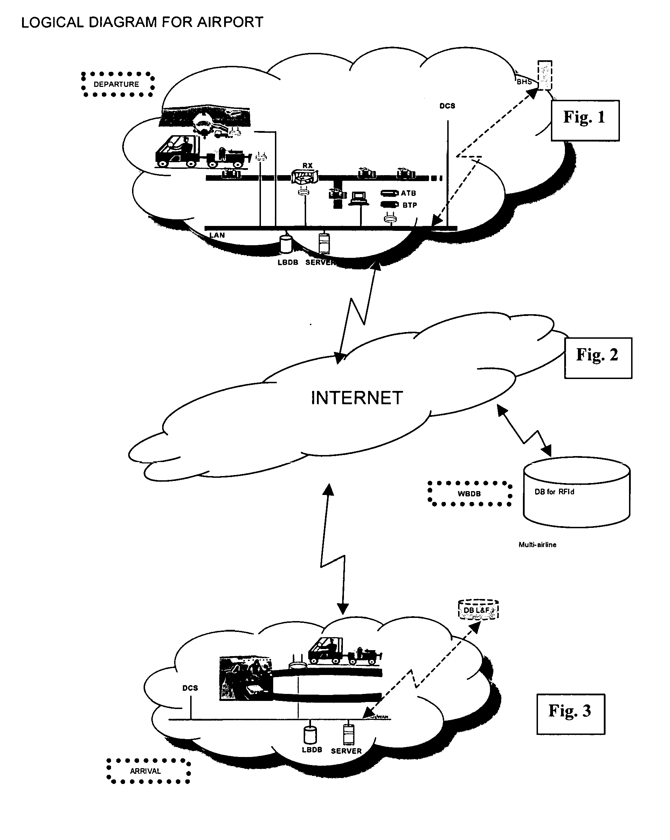

As shown in Fig. 1, the check-in operator will print the label, apply it to the baggage, as is already the case, whereas the central information system (DCS) will send (in parallel) the same information printed on the label to the local database (LBDB).

At the same time, a RFId reader (radio reading/writing unit) placed in the label printer or near it will note the serial number (univocal) of the RFId coupled with the label and will send it to the local database (LBDB), thus creating an unique and bijective match with the bar-code printed on the label.

The baggage is therefore placed on the conveyor belt for sending to the sorting area and the final exit bay.

Along this route further readers can be entered (radio reading/writing units) for RFId labels as necessary (e.g. recording that the RX radiogenic control has taken place), just as on the exit bay for effecting the baggage-passenger reconciliation.

A further reader (radio reading/writing unit) can be provided at the hold door, to record both the sequence of entry of the containers and the individual pieces of baggage loaded bulk, subsequently aiding searching in case of need.

All readers (radio reading/writing units) which have been mentioned, are connected to the local database (LBDB).

As shown in Fig. 2, when the flight is closed, the data related to the bar-codes, the corresponding RFId codes and the airport acronym are sent from the LBDB local database to the WBDB generalized system, which itself takes on the database and research engine specificities.

As shown in Fig. 3, baggage control (tracking) can also be extended to the transit and arrival airports; once recorded by the local system (constituting a reader and a LBDB), the RFId codes are integrated with the airport acronym and sent to the WBDB general system, which will direct them to the initial LBDB i.e. the departure airport which is the repository of the tracking data.

In the event of loss, the information on the state of the baggage will be immediate; the Lost & Found operator will be able to see in which airport the loss occurred and therefore send a request for the forwarding of the baggage directly to the airport concerned.

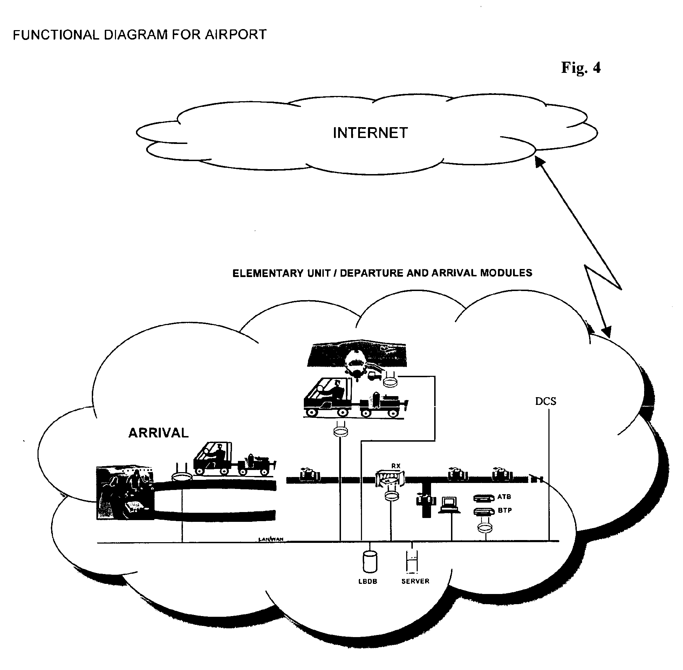

Fig. 4 illustrates the functional diagram for an airport in such a way as to highlight that the local database (LBDB) is the same for departing baggage and arriving baggage, summarizing what is described in Figures 1,2 and 3.

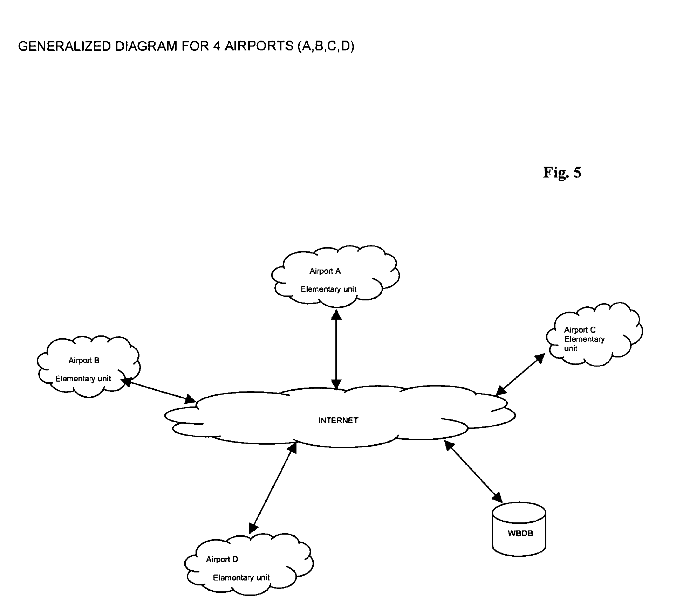

The above process occurs simply by means of Internet connections, as shown in illustration in Fig. 5 in which there is the assumption that four airports named A, B, C and D are connected.

### BENEFITS

### Organizational

- The system is completely automated and so does not require a new work organization, and in cases in which reconciliation is already performed it allows a reduction in the operational action.
- Baggage searching is made easier in the event that one or more passengers do not fly, and prevents the need for passengers to leave the aircraft and to unload all the baggage.
- The system lends itself to operate as a database for the searching of lost baggage with a reduction in the time that passengers need to spend at the Lost & Found desk, and allows the airport to reduce the usage costs of the World - Trace system as worldwide databank for lost baggage searching, by pinpointing a complementary system in this way.
- When the system concerned is generalized through the introduction of a frequency standard, it will be possible to equip suitcases (when they are manufactured, on purchase, or at the first journey etc.) with a particular identity label, which as it will be incorporated may be used by the passenger for the entire duration of the goods and without any additional costs.

### Financial

- Drastic reduction in lost baggage, with resulting lower costs for the entire Lost & Found organization (staff, space etc.) and in claims from passengers to the carriers.
- Reduction in time spent searching for baggage already in the hold, and a resulting reduction in aircraft stay times with lower costs for the carrier.
- Workforce reduction with high traffic volumes (better organization).
- Automation without additional costs for baggage-passenger reconciliation.

### Quality

- Organization of work will benefit considerably, and consequently there will be better quality performance and focus on passengers.
- Safety (RX), as a guarantee of quality and control having taken place, is automatically certified.

### Time saving

- Elimination of all manual actions in baggage recording / individuation;
- Drastic reduction in time spent searching the hold;
- Real-time crosschecking of baggage missing at the reconciliation stage;
- Elimination of queues at the Lost & Found desk to acquire passenger /baggage data.

## Claims

1. Automated system for identification and tracking of baggage, goods and vehicles in movement, essentially constituting three logical units:
- Departure unit;
- Arrival unit;
- coupling unit (WBDB engine).
The two Departure and Arrival units constitute a single physical module: **Elementary Unit**, replicable in every site (e.g. airport) which is part of the route to be tracked.

2. The peculiarity of the automated system for the identification and tracking of baggage, goods and vehicles in movement, consists of its use of radio-frequency components coupled with software programmes (databases), minimizing (only in reading of the identity code) the use of the radio (RFId) component, which constitutes a high cost as it is repeated for each label - on the contrary preferring the software component (LBDB-local database) whose cost is independent from the use cycles.

3. The automated system for the identification and tracking of baggage, goods and vehicles in movement does, however, allow extension of the personal data generated from the coupling of radio components and bar-codes in the local database (LBDB) with other data considered useful (e.g. photo, weight, address, domicile, control point etc.) at any other time or point in the same process.

4. The automated system for the identification and tracking of baggage, goods and vehicles in movement works by means of the reading of the identity code
of the Radio (RFId) component, without the need to adapt to a reading/writing standard to which the presently available systems are compelled.

5. The configuration of the set of the automated system for the identification and tracking of baggage, goods and vehicles in movement is characterized as a **NETWORK** structure whose nodes (**Elementary Units**) are replicable to infinity, intercommunicating via Internet through the WBDB (World Baggage Data Base) search engine.

6. The complex automated system for the identification and tracking of baggage, goods and vehicles in movement allows totally original identification of a new lost baggage management process, automated baggage-passenger reconciliation, automated certification of the radiogenic control and the automated control and tracking of baggage including at the aircraft level, in addition to the baggage restitution stage in the arrival and transit airports without altering the existing work organization and without increasing costs.

7. By using radio (RFId) components with memory, as well as the identity code, the automated system for the identification and tracking of baggage, goods and vehicles in movement, allows searching for lost baggage by means of the automated system through the local database (LBDB) and the generalized database (WBDB).

8. The automated system for the identification and tracking of baggage, goods and vehicles in movement allows flexibility regarding the attachments of the radio (RFId) component with its incorporation in the baggage (during manufacturing,
at purchase, or at the first journey, etc.) which may be used by the passenger for the entire duration of the goods, without any additional costs.
